# EUROPÄISCHE PATENTSCHRIFT

(11) **EP 4 523 942 B1**
(45) Veröffentlichungstag und Bekanntmachung des Hinweises auf die Patenterteilung: **03.06.2026**
(21) Anmeldenummer: 24197190.2
(22) Anmeldetag: 29.08.2024
(51) Int. Cl.: H02J 3/0073, B60L 1/00, B60L 3/00, B60L 9/00, H02J 3/26

(54) **ELEKTRISCHES VERSORGUNGSSYSTEM FÜR EIN BORDNETZ EINES SCHIENENFAHRZEUGS**
ELECTRICAL SUPPLY SYSTEM FOR AN ON-BOARD ELECTRICAL SYSTEM OF A RAIL VEHICLE
SYSTÈME D'ALIMENTATION ÉLECTRIQUE POUR UN RÉSEAU DE BORD D'UN VÉHICULE FERROVIAIRE

(30) Priorität: 31.08.2023 DE 102023208383
(43) Veröffentlichungstag der Anmeldung: 19.03.2025
(73) Patentinhaber: Siemens Mobility GmbH, 80997 München (DE)
(72) Erfinder: Schwarzer, Jens Konstantin, 47809 Krefeld (DE); Gusek, Andreas, 40627 Düsseldorf (DE); Linnhöfer, Martin, 45259 Essen (DE); Nevinskiy, Alexey, 47800 Krefeld (DE); Wellner, Andreas, 47803 Krefeld (DE)
(74) Vertreter: Siemens Patent Attorneys

(56) Entgegenhaltungen:
- EP-A1- 2 927 044
- CN-B- 109 383 299
- DE-A1- 102019 216 731

## Beschreibung

Die Erfindung betrifft ein elektrisches Versorgungssystem für ein Bordnetz eines Schienenfahrzeugs, ein Verfahren zum Steuern eines erfindungsgemäßen Versorgungssystems, ein Schienenfahrzeug umfassend zumindest ein erfindungsgemäßes Versorgungssystem sowie eine Verwendung eines erfindungsgemäßen Versorgungssystems in einem Schienenfahrzeug.

In Schienenfahrzeugen und insbesondere in Triebzügen mit mehreren Wagen für die Personenbeförderung dienen oftmals mehrere so genannte Sammelschienen eines Bordnetzes dazu, über die Wagen verteilt angeordnete Hilfsbetriebe und elektrische Verbraucher mit elektrischer Energie zu versorgen. Diese Sammelschienen führen dabei unterschiedliche konstante bzw. bezüglich der Frequenz variable Dreiphasen-Wechselspannungen wie beispielsweise 480 V, 60 Hz und 400 V, 50 Hz. Die Sammelschiene für die beispielhafte, insbesondere frequenzvariable, 480 V, 60 Hz Dreiphasen-Wechselspannung umfasst dabei üblicherweise drei Phasenleiter, mit denen Hilfsbetriebe wie Kühler, Lüfter, Pumpen oder Kompressoren verbunden sind. Die Sammelschiene für die beispielhafte konstante 400 V, 50 Hz Dreiphasen-Wechselspannung umfasst demgegenüber neben den drei Phasenleitern (bzw. Phasen L1, L2 und L3) ergänzend einen Neutralleiter (bzw. N-Leiter), mit denen einen solchen Neutralleiter erfordernde Verbraucher wie beispielsweise die Bordküche sowie mit einer Phase betriebene Verbraucher kleiner Leistung wie beispielsweise Steckdosen mit 230 V, 50 Hz, sowie Lampen der Innenbeleuchtung des Fahrgastraums verbunden sind.

Die Speisung der Sammelschienen erfolgt mittels jeweiliger Bordnetzumrichtern, welche eine Eingangs-Gleichspannung, beispielsweise eines Gleichspannungszwischenkreises eines Antriebsumrichters, in die gewünschte Ausgangs-Dreiphasen-Wechselspannung der Sammelschiene wandeln. Die Speisung erfolgt dabei redundant, d.h. mehrere, bezüglich der Sammelschiene elektrisch parallel geschaltete Bordnetzumrichter speisen gemeinsam eine alle Wagen des Triebzugs umfassende Sammelschiene, sodass in einem Fehlerfall, beispielsweise bei Ausfall eines der Bordnetzumrichter, eine gesicherte Versorgung zumindest eines Teils der mit der Sammelschiene verbundenen Hilfsbetriebe und Verbraucher gewährleistet ist. Die Bordnetzumrichter sind dabei vorzugsweise derart ausgelegt, dass sie gemeinsam die für die Hilfsbetriebe und Verbraucher benötigte Leistung bereitstellen, sodass bei Ausfall eines der Bordnetzumrichter eine entsprechend geringere Leistung auf der Sammelschiene bereitsteht und gegebenenfalls Maßnahmen zur Reduzierung des Energieverbrauchs durch die Hilfsbetriebe bzw. Verbraucher erforderlich sind.

Eine redundante Speisung durch mehrere Bordnetzumrichter ist üblicherweise ebenfalls für die Sammelschiene für die 400 V, 50 Hz Dreiphasen-Wechselspannung vorgesehen. Dies erfordert aufgrund des Neutralleiters, welcher beispielsweise als Mittelpunkt des Gleichspannungszwischenkreises des jeweiligen Bordnetzumrichters ausgeführt ist, eine aufwändige Symmetrierung der Ströme beispielsweise mittels einer Sternpunktbildung durch Zusammenschalten mehrerer Drosselspulen oder mittels eines Transformators in Sternpunktausführung. Zudem benötigen die mit dieser Sammelschiene verbundenen Verbraucher üblicherweise nur eine begrenzte Leistung, welche von einem einzigen Bordnetzumrichter bereitgestellt werden kann. Eine redundante Speisung dieser Sammelschiene durch mehrere Bordnetzumrichter führt somit nachteilig neben der aufwändigen Symmetrierung zu hohen Kosten sowie erhöhtem Platzbedarf.

Aufgabe der Erfindung ist es daher, ein Hilfsbetriebe-Versorgungssystem für ein Schienenfahrzeug anzugeben, welches die genannten Nachteile ausräumt. Diese Aufgabe wird durch das Versorgungssystem, das Verfahren und das Schienenfahrzeug mit den jeweiligen Merkmalen der unabhängigen Patentansprüche gelöst. Weiterbildungen der Erfindung sind in jeweiligen abhängigen Patentansprüchen angegeben.

Das erfindungsgemäße elektrisches Versorgungssystem für ein Bordnetz eines Schienenfahrzeug, wobei das Schienenfahrzeug eine Mehrzahl Wagen mit einer Mehrzahl in diesen angeordneten Hilfsbetrieben und/oder elektrischen Verbrauchern umfasst, umfasst zumindest eine erste und eine zweite Sammelschiene, wobei sich die Sammelschienen jeweils über zumindest zwei Wagen des Schienenfahrzeugs erstrecken und mit jeder der Sammelschienen zumindest ein Hilfsbetrieb und/oder ein elektrischer Verbraucher verbunden ist, und wobei die erste Sammelschiene drei Phasenleiter und einen Neutralleiter und die zweite Sammelschiene ausschließlich drei Phasenleiter aufweist, zumindest drei mit den Sammelschienen verbindbare Bordnetzumrichter, und eine Steuereinrichtung, wobei die Steuereinrichtung ausgestaltet ist, zumindest die Bordnetzumrichter zu steuern. Das Versorgungssystem ist dadurch gekennzeichnet, dass die Bordnetzumrichter bezüglich ihres elektrischen Aufbaus gleich ausgestaltet sind, jeweils mit der ersten und der zweiten Sammelschiene elektrisch verbindbar sind, und jeweils ausgestaltet sind, von der Steuereinrichtung gesteuert, eine erste und eine zweite Dreiphasen-Wechselspannung zu generieren, dass die Steuereinrichtung ausgestaltet ist, ausschließlich einen ersten der Bordnetzumrichter mit der ersten Sammelschiene zu verbinden und den ersten Bordnetzumrichter anzusteuern, die erste Dreiphasen-Wechselspannung an die erste Sammelschiene anzulegen, und zumindest einen zweiten und einen dritten der Bordnetzumrichter mit der zweiten Sammelschiene zu verbinden und den zweiten und den dritten Bordnetzumrichter jeweils anzusteuern, die zweite Dreiphasen-Wechselspannung an die zweite Sammelschiene anzulegen, und dass die Steuereinrichtung ausgestaltet ist, in einem Fehlerfall des ersten Bordnetzumrichters den ersten Bordnetzumrichter von der ersten Sammelschiene zu trennen, ausschließlich den zweiten oder den dritten Bordnetzumrichter von der zweiten Sammelschiene zu trennen und mit der ersten Sammelschiene zu verbinden, und den mit der ersten Sammelschiene verbundenen zweiten oder dritten Bordnetzumrichter anzusteuern, die erste Dreiphasen-Wechselspannung an die erste Sammelschiene anzulegen.

Erfindungsgemäß ist somit während des Betriebs des Versorgungssystems immer ausschließlich einer der gleich ausgestalteten Bordnetzumrichter mit der ersten Sammelschiene verbunden bzw. speist die erste Sammelschiene. Hierdurch wird eine bei einer Parallelschaltung mehrerer Bordnetzumrichter an der einen Neutralleiter umfassenden ersten Sammelschiene erforderliche Symmetrierung vorteilhaft vermieden. Andererseits ermöglicht die gleiche Ausgestaltung der zumindest drei Bordnetzumrichter vorteilhaft eine Redundanz der Versorgung der ersten Sammelschiene und damit eine gesicherte Versorgung der mit dieser verbundenen Hilfsbetriebe und/oder Verbraucher. Eine bezüglich des elektrischen Aufbaus gleiche Ausgestaltung der Bordnetzumrichter bedeutet dabei insbesondere, dass diese von der Steuereinrichtung gesteuert bzw. konfiguriert sowohl die erste als auch die zweite Dreiphasen-Wechselspannung an ihren Ausgangsanschlüssen bereitstellen können, und dass sie jeweils einen Anschluss für einen Neutralleiter aufweisen, sodass sie sowohl mit der ersten als auch mit der zweiten Sammelschiene verbunden werden können.

Die Sammelschienen erstrecken sich jeweils über zumindest zwei Wagen des Schienenfahrzeugs, vorzugsweise jedoch über alle Wagen des Schienenfahrzeugs bzw. über alle Wagen, in denen Hilfsbetriebe und/oder Verbraucher sowie die Sammelschienen speisende Bordnetzumrichter angeordnet sind. Die Sammelschienen sind dabei während des Betriebs der Versorgungseinrichtung jeweils durchgängig, **d.h.** über alle Wagen und Wagenübergänge zwischen Wagen elektrisch geschlossen. Eine Unterteilung der Sammelschienen in jeweils mehrere Abschnitte, welche beispielsweise von jeweils einem Bordnetzumrichter versorgt werden, ist dabei nicht vorgesehen.

Die Steuereinrichtung kann als eine gesonderte Steuereinrichtung des Schienenfahrzeugs speziell für die Steuerung von Bordnetzumrichter ausgestaltet sein, vorzugsweise ist diese jedoch als Bestandteil einer zentralen Steuereinrichtung, beispielsweise des so genannten zentralen Steuergeräts (abgekürzt ZSG), oder einer Antriebssteuereinrichtung, beispielsweise des so genannten Antriebssteuergeräts (abgekürzt ASG), ausgestaltet.

Nach einer Weiterbildung des Versorgungssystems ist die Steuereinrichtung ausgestaltet, die Bordnetzumrichter anzusteuern, dass die erste Dreiphasen-Wechselspannung eine erste Spannungshöhe mit einer ersten Frequenz aufweist, und dass die zweite Dreiphasen-Wechselspannung eine zweite Spannungshöhe mit einer zweiten, insbesondere variablen, Frequenz aufweist.

Nach einer weiteren Weiterbildung des Versorgungssystems weist die erste Dreiphasen-Wechselspannung eine konstante Spannungshöhe von 400 V mit einer Frequenz von 50 Hz auf.

Diese Dreiphasen-Wechselspannung dient beispielsweise einer Versorgung von elektrischen Verbrauchern für den Komfort in dem Schienenfahrzeug beförderter Personen bzw. von Fahrgästen, wobei diese Verbraucher insbesondere Einrichtungen einer Bordküche, Steckdosen sowie eine Beleuchtung für die Fahrgasträume sein können.

Nach einer weiteren Weiterbildung des Versorgungssystems ist der Neutralleiter der ersten Sammelschiene mit einem Spannungs-Mittelpunkt eines Gleichspannungszwischenkreises des mit der ersten Sammelschiene verbundenen ersten, zweiten oder dritten Bordnetzumrichters verbunden.

Dieser Spannungs-Mittelpunkt wird beispielsweise von einem Mittenanschluss zweier in Reihe geschalteter Kapazitäten gleicher Größe, deren jeweiliger anderer Anschluss mit einem der beiden Spannungspotenziale des Gleichspannungszwischenkreises verbunden sind, gebildet.

Nach einer weiteren Weiterbildung des Versorgungssystems sind die Bordnetzumrichter mittels jeweiliger Schalter, insbesondere von der Steuereinrichtung steuerbare Trennschalter, mit den Sammelschienen verbindbar.

Die Steuereinrichtung steuert die Schalter dabei derart an, dass der jeweilige Bordnetzumrichter entweder mit der ersten Sammelschiene oder mit der zweiten Sammelschiene verbunden ist. Bei einer Verbindung mit der zweiten Sammelschiene, welche keinen Neutralleiter umfasst, kann der entsprechende Schalter geöffnet sein.

Nach einer weiteren Weiterbildung des Versorgungssystems sind die Bordnetzumrichter in zumindest zwei Wagen des Schienenfahrzeugs verteilt angeordnet, wobei insbesondere der erste und der zweite Bordnetzumrichter oder der erste und der dritte Bordnetzumrichter gemeinsam in einem Wagen angeordnet sind.

Beispielsweise können die Bordnetzumrichter dabei jeweils in dem Wagen angeordnet sein, in dem auch ein Antriebsumrichter bzw. Antriebsstromrichter des Antriebssystems des Schienenfahrzeugs angeordnet ist. Insbesondere wenn die Bordnetzumrichter jeweils aus einem Gleichspannungszwischenkreis eines Antriebsumrichters gespeist werden, kann hierdurch eine kurze Leitungsführung sowie gegebenenfalls eine Anordnung sowohl des Antriebsumrichters als auch des bzw. der Bordnetzumrichter in einem gemeinsamen Gehäuse bzw. Container verwirklicht werden.

Nach einer weiteren Weiterbildung des Versorgungssystems umfassen die Bordnetzumrichter jeweils einen, von der Steuereinrichtung steuerbaren, Pulswechselrichter, wobei der Pulswechselrichter ausgestaltet ist, eine Gleichspannung eines Gleichspannungszwischenkreises des Bordnetzumrichters in die erste oder die zweite Dreiphasen-Wechselspannung zu wandeln.

Insbesondere ermöglicht ein gesteuerter Pulswechselrichter, wie er typischerweise auch für die Versorgung von Drehstrom-Antriebsmotoren eingesetzt wird, eine flexible Anpassung der Spannungshöhe sowie der Frequenz der Dreiphasen-Wechselspannung, welche von dem Bordnetzumrichter an der ersten oder der zweiten Sammelschiene angelegt wird.

Das erfindungsgemäße Verfahren zum Steuern eines elektrischen Versorgungssystems für ein Bordnetz eines Schienenfahrzeug, wobei das Schienenfahrzeug eine Mehrzahl Wagen mit einer Mehrzahl in diesen angeordneten Hilfsbetrieben und/oder elektrischen Verbrauchern umfasst, und wobei das Versorgungssystem zumindest eine erste und eine zweite Sammelschiene, wobei sich die Sammelschienen jeweils über zumindest zwei Wagen des Schienenfahrzeugs erstrecken und mit jeder der Sammelschienen zumindest ein Hilfsbetrieb und/oder ein elektrischer Verbraucher verbunden ist, und wobei die erste Sammelschiene drei Phasenleiter und einen Neutralleiter und die zweite Sammelschiene ausschließlich drei Phasenleiter aufweist, zumindest drei mit den Sammelschienen verbindbare Bordnetzumrichter, und eine Steuereinrichtung ermöglicht, wobei die Steuereinrichtung ausgestaltet ist, zumindest die Bordnetzumrichter zu steuern, ist dadurch gekennzeichnet, dass die Bordnetzumrichter bezüglich ihres elektrischen Aufbaus gleich ausgestaltet sind, jeweils mit der ersten und der zweiten Sammelschiene elektrisch verbindbar sind, und jeweils ausgestaltet sind, von der Steuereinrichtung gesteuert, eine erste und eine zweite Dreiphasen-Wechselspannung zu generieren, dass die Steuereinrichtung ausschließlich einen ersten der Bordnetzumrichter mit der ersten Sammelschiene verbindet und den ersten Bordnetzumrichter ansteuert, die erste Dreiphasen-Wechselspannung an die erste Sammelschiene anzulegen, und zumindest einen zweiten und einen dritten der Bordnetzumrichter mit der zweiten Sammelschiene verbindet und den zweiten und den dritten Bordnetzumrichter jeweils ansteuert, die zweite Dreiphasen-Wechselspannung an die zweite Sammelschiene anzulegen, und dass die Steuereinrichtung in einem Fehlerfall des ersten Bordnetzumrichters den ersten Bordnetzumrichter von der ersten Sammelschiene trennt, ausschließlich den zweiten oder den dritten Bordnetzumrichter von der zweiten Sammelschiene trennt und mit der ersten Sammelschiene verbindet, und den mit der ersten Sammelschiene verbundenen zweiten oder dritten Bordnetzumrichter ansteuert, die erste Dreiphasen-Wechselspannung an die erste Sammelschiene anzulegen.

Nach einer Weiterbildung des Verfahrens steuert die Steuereinrichtung die Bordnetzumrichter an, dass die erste Dreiphasen-Wechselspannung eine erste Spannungshöhe mit einer ersten Frequenz aufweist, und dass die zweite Dreiphasen-Wechselspannung eine zweite Spannungshöhe mit einer zweiten, insbesondere variablen, Frequenz aufweist.

Das erfindungsgemäße Schienenfahrzeug umfasst zumindest ein erfindungsgemäßes Versorgungssystem.

Nach einer Weiterbildung des Schienenfahrzeugs ist dieses als ein Triebzug mit mehreren Wagen für eine Personenbeförderung ausgestaltet, wobei in einem der Wagen insbesondere eine mittels der ersten Sammelschiene versorgte Bordküche angeordnet ist.

Eine erfindungsgemäße Verwendung des erfindungsgemäßen Versorgungssystems dient einer Versorgung von Hilfsbetrieben und/oder elektrischen Verbrauchern in einem Schienenfahrzeug.

Nachfolgend wird die Erfindung anhand von Ausführungsbeispielen erläutert. Dabei zeigen:
- FIG 1: ein Schienenfahrzeug mit einem erfindungsgemäßen Versorgungssystem,
- FIG 2: ein erfindungsgemäßes Versorgungssystem in einem Normalbetrieb, und
- FIG 3: das Versorgungssystem der FIG 2 in einem Fehlerbetrieb.

Aus Gründen der Übersichtlichkeit werden für gleiche bzw. gleich oder nahezu gleich wirkende Komponenten dieselben Bezugszeichen verwendet.

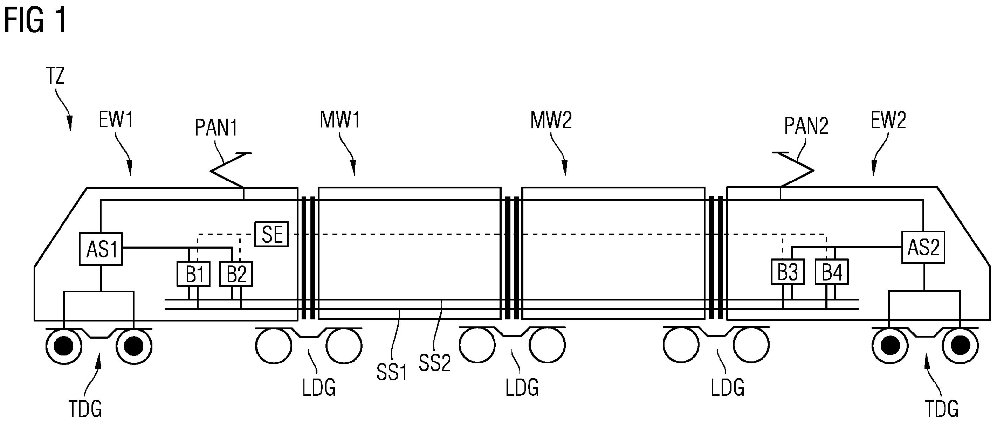

FIG 1 zeigt schematisch ein Schienenfahrzeug TZ in einer Seitenansicht, welches als ein Triebzug ausgestaltet ist. Der Triebzug umfasst eine Mehrzahl miteinander gekoppelter Wagen, in dem Beispiel gesamt vier Wagen, wobei zwei der Wagen als Endwagen EW1, EW2, und zwei weitere Wagen als Mittelwagen MW1, MW2 ausgestaltet sind. Vorzugsweise alle vier Wagen weisen einen jeweiligen Fahrgastraum auf, welcher sowohl über Türen in Seitenwänden des jeweiligen Wagenkastens als auch über Wagenübergänge zwischen benachbarten Wagen für Fahrgäste zugänglich sind. Insbesondere abhängig von dem Einsatzbereich des Triebzugs kann die Anzahl Wagen und damit die Gesamtlänge des Triebzugs gewählt werden. So kann beispielsweise ein Hochgeschwindigkeits-Triebzug bei einer Gesamtlänge von ca. 200 Metern sieben bis neun Wagen umfassen. Die Wagen EW1, MW1, MW2, EW2 des Schienenfahrzeugs TZ stützen sich jeweils über zwei Drehgestelle auf nicht dargestellten Schienen eines Gleises eines Streckennetzes ab, wobei miteinander gekoppelte Wagen auch auf einem gemeinsamen Drehgestell abstützen können, wie es in der FIG 1 beispielhaft dargestellt ist. Die äußeren Drehgestelle der beiden Endwagen EW1, EW2 sind beispielhaft als Triebdrehgestelle TDG mit darin angeordneten Antriebsmotoren des Antriebssystems ausgestaltet, während alle weiteren Drehgestelle als nicht angetriebene Laufdrehgestelle LDG ausgestaltet sind.

Das Schienenfahrzeug TZ weist zwei Antriebssystems AS1, AS2 auf, deren jeweiligen hauptsächlichen Komponenten in den Endwagen EW1, EW2 angeordnet sind, wobei diese Komponenten vorzugsweise im Dach- und Unterflurbereich des jeweiligen Endwagens EW1, EW2 angeordnet sind, um auch in diesen Wagen einen jeweiligen Fahrgastraum zur Verfügung stellen zu können. Die Antriebssysteme AS1, AS2 werden von einer nicht dargestellten Oberleitung eines Versorgungsnetzes, an welcher eine Versorgungsspannung als Einphasen-Wechselspannung, beispielsweise 25 kV, 50 Hz oder 15 kV, 16.7 Hz, oder als Gleichspannung, beispielsweise 3 kV oder 1.5 kV, anliegt, mit elektrischer Energie versorgt. Für eine elektrische Verbindung der Antriebssysteme AS1, AS2 mit der Oberleitung weist das Schienenfahrzeug beispielhaft zwei Stromabnehmer PAN1, PAN2 auf, die jeweils im Dachbereich eines Endwagens EW1, EW2 angeordnet sind. Die Stromabnehmer PAN1, PAN2 können dabei elektrisch verbunden sein, beispielsweise über eine in der FIG 1 dargestellte fahrzeugweite Stromleitung, sodass gegebenenfalls die Verbindung nur eines der Stromabnehmer PAN1, PAN2 mit der Oberleitung ausreicht. Das jeweilige Antriebssystem AS1, AS2 umfasst, insbesondere abhängig von der Versorgungsspannung, einen Transformator, welcher die primärseitig anliegende Einphasen-Wechselspannung in eine sekundärseitig anliegende niedrigere Spannung transformiert, einen mit der Sekundärseite des Transformators verbundenen Antriebsumrichter, welcher die Einphasen-Wechselspannung mittels zumindest eines Gleichrichters, beispielsweise eines Vierquadrantenstellers, in eine Gleichspannung eines Gleichspannungszwischenkreises wandelt, und diese Gleichspannung mittels zumindest eines Wechselrichters, beispielsweise eines Pulswechselrichters, in eine Dreiphasen-Wechselspannung variabler Spannungshöhe und Frequenz wandelt, mit welcher Antriebsmotoren gespeist werden.

Neben den Antriebssystemen AS1, AS2 weist das Schienenfahrzeug ein Bordnetz auf, welches insbesondere einer Versorgung von Hilfsbetrieben, welche für die Funktion insbesondere der verschiedenen Komponenten der Antriebssysteme sowie beispielsweise des Bremssystems des Schienenfahrzeugs erforderlich sind, von Steuerungs- und Informationssystemen sowie von dem Komfort von Fahrgästen dienenden elektrischen Verbrauchern dient. Nach der FIG 1 umfasst das Bordnetz des Schienenfahrzeugs TZ zwei Sammelschienen SS1, SS2, welche sich über die gesamte Länge bzw. über alle Wagen EW1, MW1, MW2, EW2 des Schienenfahrzeugs TZ erstrecken. Mit den Sammelschienen SS1, SS2 sind die verschiedenen Hilfsbetriebe und Verbraucher elektrisch verbunden. Die Sammelschienen SS1, SS2 werden jeweils von einem oder parallel von mehreren Bordnetzumrichtern B1, B2, B3, B4 gespeist. Die Bordnetzumrichter B1, B2, B3, B4 sind beispielhaft in den Endwagen EW1, EW2 angeordnet und jeweils eingangsseitig mit dem Gleichspannungszwischenkreis eines Antriebsumrichters verbunden, wobei nach FIG 1 die Bordnetzumrichter B1 und B2 mit dem Gleichspannungszwischenkreis des Antriebsumrichters des ersten Antriebssystems AS1 verbunden sind, während die Bordnetzumrichter B3 und B4 mit dem Gleichspannungszwischenkreis des Antriebsumrichters des zweiten Antriebssystems AS2 verbunden sind. Ergänzend zu den dargestellten vier Bordnetzumrichtern B1, B2, B3, B4 können weitere Bordnetzumrichter, auch in anderen Wagen des Schienenfahrzeugs TZ angeordnet, vorgesehen werden. Die jeweilige Funktion der Bordnetzumrichter B1, B2, B3, B4 wird von einer in dem ersten Endwagen EW1 angeordneten Steuereinrichtung SE gesteuert, wie es durch die gestrichelten Linien dargestellt ist. Diese Steuerung umfasst insbesondere die Spannungshöhe und Frequenz der jeweiligen Ausgangsspannung der Bordnetzumrichter B1, B2, B3, B4, sowie deren jeweilige Verbindung mit der einen oder der anderen Sammelschiene SS1, SS2. Beispielsweise ist die Steuereinrichtung SE als ein integraler Bestandteil einer zentralen Fahrzeugsteuerung des Schienenfahrzeugs TZ ausgestaltet.

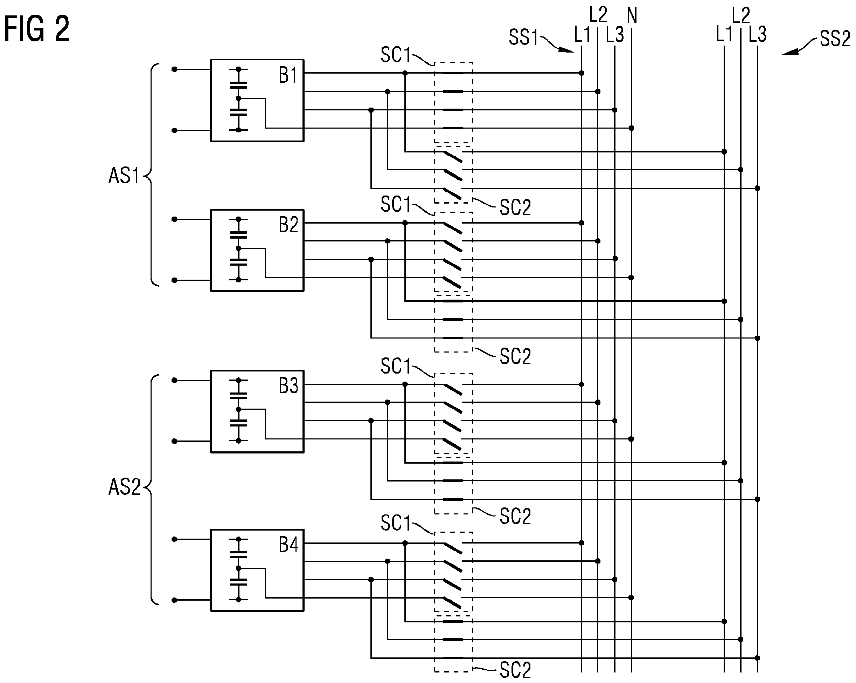

FIG 2 zeigt ein Versorgungssystem entsprechend der FIG 1. Die vier Bordnetzumrichter B1, B2, B3, B4 sind bezüglich ihres elektrischen Aufbaus gleich ausgestaltet, wobei jeder Bordnetzumrichter B1, B2, B3, B4 sowohl mit der ersten SS1 als auch mit der zweiten Sammelschiene SS2 über Schalter SC1, SC2 verbunden werden und an der verbundenen Sammelschiene SS1, SS2 die jeweils gewünschte Dreiphasen-Wechselspannung anlegen kann. Die Sammelschienen SS1, SS2 unterscheiden sich dabei dahingehend, dass die erste Sammelschiene SS1 sowohl drei Phasenleiter L1, L2, L3 als auch einen Neutralleiter N umfasst, während die zweite Sammelschiene SS2 ausschließlich drei Phasenleiter L1, L2, L3 umfasst. Der Neutralleiter N der ersten Sammelschiene SS1 wird über den Schalter SC1 mit einem Spannungs-Mittelpunkt eines Gleichspannungszwischenkreises des jeweiligen Bordnetzumrichters B1, B2, B3, B4 verbunden, wie es in der FIG 2 schematisch dargestellt ist, und ist ansonsten mit dem Erdpotenzial des Schienenfahrzeugs TZ verbunden, was jedoch nicht speziell dargestellt ist.

An der ersten Sammelschiene SS1 liegt eine Dreiphasen-Wechselspannung von 400 V, 50 Hz an. Diese Spannung dient beispielsweise der Versorgung von mit der ersten Sammelschiene SS1 verbundenen elektrischen Geräten einer Bordküche, welche in einem Wagen des Schienenfahrzeugs TZ angeordnet ist, sowie von weiteren elektrischen Verbrauchern wie beispielsweise Steckdosen für Fahrgästen und der Beleuchtung in den Wagen. An der zweiten Sammelschiene SS2 liegt hingegen beispielsweise eine konstante Dreiphasen-Wechselspannung von 480 V, 60 Hz an, welche beispielsweise der Versorgung von Hilfsbetrieben dient. Beispielsweise kann die Spannungshöhe und/oder die Frequenz der Dreiphasen-Wechselspannung der zweiten Sammelschiene jedoch auch variabel sein, sodass von der Steuereinrichtung SE mittels einer geeigneten Wahl dieser Parameter beispielsweise eine Drehzahl von Lüftern oder Pumpen gesteuert werden kann.

Die FIG 2 zeigt eine für den Normalbetrieb des Versorgungssystems geeignete Konfiguration, wobei ausschließlich der erste Bordnetzumrichter B1 mit der ersten Sammelschiene SS1 verbunden ist, dargestellt durch einen geschlossenen ersten Schalter SC1, und an diese die 400 V, 50 Hz Dreiphasen-Wechselspannung anlegt. Die drei weiteren Bordnetzumrichter B2, B3 und B4 sind hingegen mit der zweiten Sammelschiene SS2 verbunden, dargestellt durch einen jeweils geschlossenen zweiten Schalter SC2, und legen an diese jeweils die gewünschte bzw. von der Steuereinrichtung SE gesteuerte Dreiphasen-Wechselspannung an. Erste und zweite Schalter SC1, SC2 werden jeweils ebenfalls von der Steuereinrichtung SE gesteuert. Die Schalter SC1, SC3 können jeweils als mehrpolige Trennschalter oder so genannte Koppelschütze ausgestaltet sein.

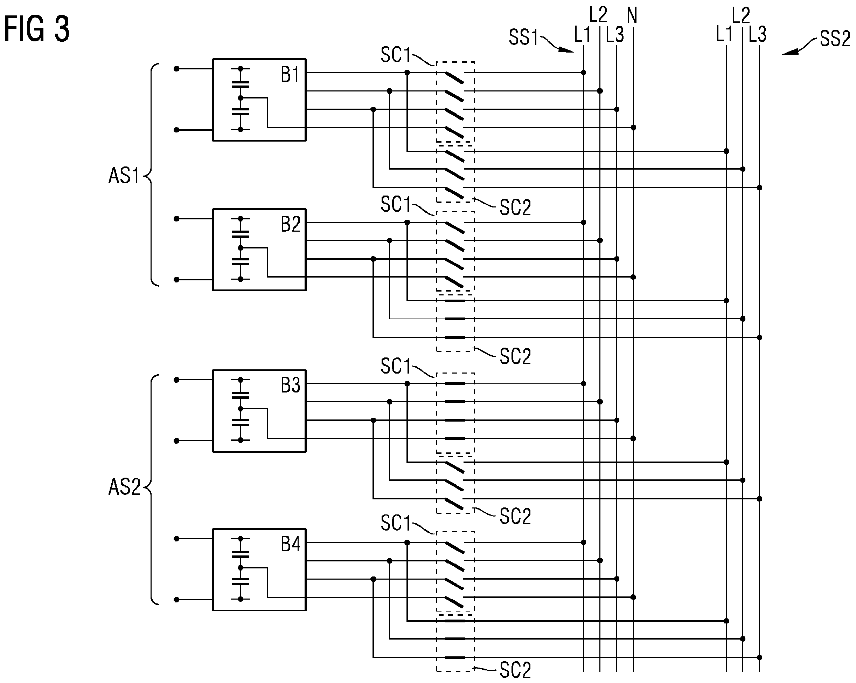

Die FIG 3 zeigt demgegenüber eine für einen Fehlerfall des Versorgungssystems geeignete Konfiguration. Ausgehend von der angenommenen Situation, dass der im Normalbetrieb allein die erste Sammelschiene SS1 speisende erste Bordnetzumrichter B1 fehlerbehaftet und damit für eine fortgesetzte Speisung der ersten Sammelschiene SS1 nicht mehr geeignet ist, steuert die Steuereinrichtung SE den ersten Schalter SC1 an, sodass der erste Bordnetzumrichter B1 mit keiner der beiden Sammelschienen SS1, SS2 mehr verbunden ist. Um die mit der ersten Sammelschiene SS1 verbundenen insbesondere Verbraucher weiter versorgen zu können, steuert die Steuereinrichtung SE den dritten Bordnetzumrichter B3, dass an dessen Ausgängen keine Dreiphasen-Wechselspannung mehr anliegt. Anschließend steuert bzw. öffnet die Steuereinrichtung SE den zweiten Schalter SC2 des dritten Bordnetzumrichters B3, um diesen von der zweiten Sammelschiene SS2 zu trennen, und steuert bzw. schließt nachfolgend den ersten Schalter SC1 des dritten Bordnetzumrichters B3, um diesen mit der ersten Sammelschiene SS1 zu verbinden. Nach bestehender Verbindung steuert die Steuereinrichtung SE entsprechend den dritten Bordnetzumrichter B3, dass dieser die 400 V, 50 Hz Dreiphasen-Wechselspannung an die erste Sammelschiene anlegt. Die zweite Sammelschiene SS2 wird dabei fortgesetzt von dem zweiten B2 und vierten Bordnetzumrichter B4 versorgt. Sofern deren Leistung nicht für die Versorgung aller mit der zweiten Sammelschiene verbundenen Hilfsbetriebe und/oder Verbraucher ausreicht, muss deren Funktion bzw. Leistung von der Steuereinrichtung SE gesteuert gegebenenfalls reduziert werden.

## Patentansprüche

1. Elektrisches Versorgungssystem für ein Bordnetz eines Schienenfahrzeug (TZ),
wobei das Schienenfahrzeug (TZ) eine Mehrzahl Wagen (EW1, EW2, MW1, MW2) mit einer Mehrzahl in diesen angeordneten Hilfsbetrieben und/oder elektrischen Verbrauchern umfasst, und
wobei das Versorgungssystem zumindest umfasst:
- eine erste und eine zweite Sammelschiene (SS1, SS2), wobei sich die Sammelschienen (SS1, SS2) jeweils über zumindest zwei Wagen (EW1, EW2, MW1, MW2) des Schienenfahrzeugs (TZ) erstrecken und mit jeder der Sammelschienen (SS1, SS2) zumindest ein Hilfsbetrieb und/oder ein elektrischer Verbraucher verbunden ist, und wobei die erste Sammelschiene (SS1) drei Phasenleiter (L1, L2, L3) und einen Neutralleiter (N) und die zweite Sammelschiene (SS2) ausschließlich drei Phasenleiter (L1, L2, L3) aufweist,
- zumindest drei mit den Sammelschienen (SS1, SS2) verbindbare Bordnetzumrichter (B1, B2, B3, B4), und
- eine Steuereinrichtung (SE), wobei die Steuereinrichtung (SE) ausgestaltet ist, zumindest die Bordnetzumrichter (B1, B2, B3, B4) zu steuern, wobei
- die Bordnetzumrichter (B1, B2, B3, B4) bezüglich ihres elektrischen Aufbaus gleich ausgestaltet sind, jeweils mit der ersten und der zweiten Sammelschiene (SS1, SS2) elektrisch verbindbar sind, und jeweils ausgestaltet sind, von der Steuereinrichtung (SE) gesteuert, eine erste und eine zweite Dreiphasen-Wechselspannung zu generieren,
- die Steuereinrichtung (SE) ausgestaltet ist, ausschließlich einen ersten der Bordnetzumrichter (B1) mit der ersten Sammelschiene (SS1) zu verbinden und den ersten Bordnetzumrichter (B1) anzusteuern, die erste Dreiphasen-Wechselspannung an die erste Sammelschiene (SS1) anzulegen, und zumindest einen zweiten und einen dritten der Bordnetzumrichter (B2, B3, B4) mit der zweiten Sammelschiene (SS2) zu verbinden und den zweiten und den dritten Bordnetzumrichter (B2, B3, B4) jeweils anzusteuern, die zweite Dreiphasen-Wechselspannung an die zweite Sammelschiene (SS2) anzulegen, und
- die Steuereinrichtung (SE) ausgestaltet ist, in einem Fehlerfall des ersten Bordnetzumrichters (B1) den ersten Bordnetzumrichter (B1) von der ersten Sammelschiene (SS1) zu trennen, ausschließlich den zweiten oder den dritten Bordnetzumrichter (B3) von der zweiten Sammelschiene (SS2) zu trennen und mit der ersten Sammelschiene (SS1) zu verbinden, und den mit der ersten Sammelschiene (SS1) verbundenen zweiten oder dritten Bordnetzumrichter (B3) anzusteuern, die erste Dreiphasen-Wechselspannung an die erste Sammelschiene (SS1) anzulegen.

2. Versorgungssystem nach Anspruch 1,
**dadurch gekennzeichnet, dass**
die Steuereinrichtung (SE) ausgestaltet ist, die Bordnetzumrichter (B1, B2, B3, B4) anzusteuern, dass
- die erste Dreiphasen-Wechselspannung eine erste Spannungshöhe mit einer ersten Frequenz aufweist, und
- die zweite Dreiphasen-Wechselspannung eine zweite Spannungshöhe mit einer zweiten, insbesondere variablen, Frequenz aufweist.

3. Versorgungssystem nach Anspruch 1 oder 2,
**dadurch gekennzeichnet, dass**
die erste Dreiphasen-Wechselspannung eine konstante Spannungshöhe von 400 V mit einer Frequenz von 50 Hz aufweist.

4. Versorgungssystem nach einem der vorstehenden Ansprüche,
**dadurch gekennzeichnet, dass**
der Neutralleiter (N) der ersten Sammelschiene (SS1) mit einem Spannungs-Mittelpunkt eines Gleichspannungszwischenkreises des mit der ersten Sammelschiene (SS1) verbundenen ersten, zweiten oder dritten Bordnetzumrichters (B1, B3) verbunden ist.

5. Versorgungssystem nach einem der vorstehenden Ansprüche,
**dadurch gekennzeichnet, dass**
die Bordnetzumrichter (B1, B2, B3, B4) mittels jeweiliger Schalter (SC1, SC2), insbesondere von der Steuereinrichtung steuerbare Trennschalter, mit den Sammelschienen (SS1, SS2) verbindbar sind.

6. Versorgungssystem nach einem der vorstehenden Ansprüche,
**dadurch gekennzeichnet, dass**
die Bordnetzumrichter (B1, B2, B3, B4) in zumindest zwei Wagen (EW1, EW2) des Schienenfahrzeugs (TZ) verteilt angeordnet sind, wobei insbesondere der erste und der zweite Bordnetzumrichter (B1, B2) oder der erste und der dritte Bordnetzumrichter gemeinsam in einem Wagen (EW1) angeordnet sind.

7. Versorgungssystem nach einem der vorstehenden Ansprüche,
**dadurch gekennzeichnet, dass**
die Bordnetzumrichter (B1, B2, B3, B4) jeweils einen, von der Steuereinrichtung (SE) steuerbaren, Pulswechselrichter umfassen, wobei der Pulswechselrichter ausgestaltet ist, eine Gleichspannung eines Gleichspannungszwischenkreises des Bordnetzumrichters (B1, B2, B3, B4) in die erste oder die zweite Dreiphasen-Wechselspannung zu wandeln.

8. Verfahren zum Steuern eines elektrischen Versorgungssystems für ein Bordnetz eines Schienenfahrzeug (TZ),
wobei das Schienenfahrzeug (TZ) eine Mehrzahl Wagen (EW1, EW2, MW1, MW2) mit einer Mehrzahl in diesen angeordneten Hilfsbetrieben und/oder elektrischen Verbrauchern umfasst, und
wobei das Versorgungssystem zumindest umfasst:
- eine erste und eine zweite Sammelschiene (SS1, SS2), wobei sich die Sammelschienen (SS1, SS2) jeweils über zumindest zwei Wagen (EW1, EW2, MW1, MW2) des Schienenfahrzeugs (TZ) erstrecken und mit jeder der Sammelschienen (SS1, SS2) zumindest ein Hilfsbetrieb und/oder ein elektrischer Verbraucher verbunden ist, und wobei die erste Sammelschiene (SS1) drei Phasenleiter (L1, L2, L3) und einen Neutralleiter (N) und die zweite Sammelschiene (SS2) ausschließlich drei Phasenleiter (L1, L2, L3) aufweist,
- zumindest drei mit den Sammelschienen (SS1, SS2) verbindbare Bordnetzumrichter (B1, B2, B3, B4), und
- eine Steuereinrichtung (SE), wobei die Steuereinrichtung (SE) ausgestaltet ist, zumindest die Bordnetzumrichter (B1, B2, B3, B4) zu steuern, wobei
- die Bordnetzumrichter (B1, B2, B3, B4) bezüglich ihres elektrischen Aufbaus gleich ausgestaltet sind, jeweils mit der ersten und der zweiten Sammelschiene (SS1, SS2) elektrisch verbindbar sind, und jeweils ausgestaltet sind, von der Steuereinrichtung (SE) gesteuert, eine erste und eine zweite Dreiphasen-Wechselspannung zu generieren,
- die Steuereinrichtung (SE) ausschließlich einen ersten der Bordnetzumrichter (B1) mit der ersten Sammelschiene (SS1) verbindet und den ersten Bordnetzumrichter (B1) ansteuert, die erste Dreiphasen-Wechselspannung an die erste Sammelschiene (SS1) anzulegen, und zumindest einen zweiten und einen dritten der Bordnetzumrichter (B2, B3, B4) mit der zweiten Sammelschiene (SS2) verbindet und den zweiten und den dritten Bordnetzumrichter (B2, B3, B4) jeweils ansteuert, die zweite Dreiphasen-Wechselspannung an die zweite Sammelschiene (SS2) anzulegen, und
- die Steuereinrichtung (SE) in einem Fehlerfall des ersten Bordnetzumrichters (B1) den ersten Bordnetzumrichter (B1) von der ersten Sammelschiene (SS1) trennt, ausschließlich den zweiten oder den dritten Bordnetzumrichter (B3) von der zweiten Sammelschiene (SS2) trennt und mit der ersten Sammelschiene (SS1) verbindet, und den mit der ersten Sammelschiene (SS1) verbundenen zweiten oder dritten Bordnetzumrichter (B3) ansteuert, die erste Dreiphasen-Wechselspannung an die erste Sammelschiene (SS1) anzulegen.

9. Verfahren nach Anspruch 8,
**dadurch gekennzeichnet, dass**
die Steuereinrichtung (SE) die Bordnetzumrichter (B1, B2, B3, B4) ansteuert, dass
- die erste Dreiphasen-Wechselspannung eine erste Spannungshöhe mit einer ersten Frequenz aufweist, und
- die zweite Dreiphasen-Wechselspannung eine zweite Spannungshöhe mit einer zweiten, insbesondere variablen, Frequenz aufweist.

10. Schienenfahrzeug (TZ),
**dadurch gekennzeichnet, dass**
es zumindest ein Versorgungssystem nach einem der Ansprüche 1 bis 7 umfasst.

11. Schienenfahrzeug (TZ) nach Anspruch 10,
**dadurch gekennzeichnet, dass**
es als ein Triebzug mit mehreren Wagen für eine Personenbeförderung ausgestaltet ist, wobei in einem der Wagen insbesondere eine mittels der ersten Sammelschiene (SS1) versorgte Bordküche angeordnet ist.

12. Verwendung eines Versorgungssystems nach einem der Ansprüche 1 bis 7 zur Versorgung von Hilfsbetrieben und/oder elektrischen Verbrauchern in einem Schienenfahrzeug (TZ).

## Claims

1. Electrical supply system for an on-board electrical system of a rail vehicle (TZ),
wherein the rail vehicle (TZ) comprises a plurality of cars (EW1, EW2, MW1, MW2) with a plurality of auxiliaries and/or electrical consumers arranged herein, and
wherein the supply system at least comprises:
- a first and a second busbar (SS1, SS2), wherein the busbars (SS1, SS2) extend in each case over at least two cars (EW1, EW2, MW1, MW2) of the rail vehicle (TZ) and at least one auxiliary and/or one electrical consumer is connected to each of the busbars (SS1, SS2), and wherein the first busbar (SS1) has three phase conductors (L1, L2, L3) and a neutral conductor (N) and the second busbar (SS2) has exclusively three phase conductors (L1, L2, L3),
- at least three on-board electrical system converters (B1, B2, B3, B4) which can be connected to the busbars (SS1, SS2), and
- a control facility (SE), wherein the control facility (SE) is designed to control at least the on-board electrical system converters (B1, B2, B3, B4),
wherein
- the on-board electrical system converters (B1, B2, B3, B4) are designed identically with respect to their electrical setup, can be electrically connected in each case to the first and the second busbars (SS1, SS2), and are designed in each case, controlled by the control facility (SE), to generate a first and second three-phase alternating voltage,
- the control facility (SE) is designed to exclusively connect a first of the on-board electrical system converters (B1) to the first busbar (SS1) and to actuate the first on-board electrical system converter (B1) to apply the first three-phase alternating voltage to the first busbar (SS1) and to connect at least a second and a third of the on-board electrical system converters (B2, B3, B4) to the second busbar (SS2) and to actuate the second and the third on-board electrical system converters (B2, B3, B4) in each case to apply the second three-phase alternating voltage to the second busbar (SS2), and
- the control facility (SE) is designed to separate the first on-board electrical system converter (B1) from the first busbar (SS1) in the event of a fault in the first on-board electrical system converter (B1), to exclusively separate the second or the third on-board electrical system converter (B3) from the second busbar (SS2) and to connect the same to the first busbar (SS1) and to actuate the second or third on-board electrical system converter (B3) connected to the first busbar (SS1) in order to apply the first three-phase alternating voltage to the first busbar (SS1).

2. Supply system according to claim 1,
**characterised in that**
the control device (SE) is designed to actuate the on-board electrical system converter (B1, B2, B3, B4) such that
- the first three-phase alternating voltage has a first voltage level with a first frequency, and
- the second three-phase alternating voltage has a second voltage level with a second, in particular, variable frequency.

3. Supply system according to claim 1 or 2,
**characterised in that**
the first three-phase alternating voltage has a constant voltage level of 400 V with a frequency of 50 Hz.

4. Supply system according to one of the preceding claims,
**characterised in that**
the neutral conductor (N) of the first busbar (SS1) is connected to a voltage centre point of a direct voltage intermediate circuit of the first, second or third on-board electrical system converter (B1, B3) connected to the first busbar (SS1).

5. Supply system according to one of the preceding claims,
**characterised in that**
the on-board electrical system converter (B1, B2, B3, B4) can be connected to the busbars (SS1, SS2) by means of respective switches (SC1, SC2), in particular isolators which can be controlled by the control facility.

6. Supply system according to one of the preceding claims,
**characterised in that**
the on-board electrical system converters (B1, B2, B3, B4) are arranged distributed in at least two cars (EW1, EW2) of the rail vehicle (TZ), wherein in particular the first and the second on-board electrical system converter (B1, B2) or the first and the third on-board electrical system converter are arranged jointly in a car (EW1).

7. Supply system according to one of the preceding claims,
**characterised in that**
the on-board electrical system converters (B1, B2, B3, B4) in each case comprise a pulse inverter which can be controlled by the control facility (SE), wherein the pulse inverter is designed to convert a direct voltage of a direct voltage intermediate circuit of the on-board electrical system converter (B1, B2, B3, B4) into the first or the second three-phase alternating voltage.

8. Method for controlling an electrical supply system for an on-board electrical system of a rail vehicle (TZ),
wherein the rail vehicle (TZ) comprises a plurality of cars (EW1, EW2, MW1, MW2) with a plurality of auxiliaries and/or electrical consumers arranged herein, and
wherein the supply system at least comprises:
- a first and a second busbar (SS1, SS2), wherein the bus bars (SS1, SS2) extend in each case over at least two cars (EW1, EW2, MW1, MW2) of the rail vehicle (TZ) and at least one auxiliary and/or one electrical consumer is connected to each of the busbars (SS1, SS2), and wherein the first busbar (SS1) has three phase conductors (L1, L2, L3) and a neutral conductor (N) and the second busbar (SS2) has exclusively three phase conductors (L1, L2, L3),
- at least three on-board electrical system converters (B1, B2, B3, B3) which can be connected to the busbars (SS1, SS2), and
- a control facility (SE), wherein the control facility (SE) is designed to control at least the on-board electrical system converters (B1, B2, B3, B4),
wherein
- the on-board electrical system converters (B1, B2, B3, B4) are designed identically with respect to their electrical setup, can be electrically connected to the first and second busbar (SS1, SS2) in each case, and are designed in each case, controlled by the control facility (SE), to generate a first and a second three-phase alternating voltage,
- the control facility (SE) exclusively connects a first of the on-board electrical system converters (B1) to the first busbar (SS1) and actuates the first on-board electrical system converter (B1) to apply the first three-phase alternating voltage to the first busbar (SS1), and connects at least one second and one third of the on-board electrical system converters (B2, B3, B4) to the second busbar (SS2) and actuates the second and the third on-board electrical system converter (B2, B3, B4) in each case to apply the second three-phase alternating voltage to the second busbar (SS2), and
- the control facility (SE), in the event of a fault in the first on-board electrical system converter (B1), separates the first on-board electrical system converter (B1) from the first busbar (SS1), exclusively separates the second or the third on-board electrical system converter (B3) from the second busbar (SS2) and connects the same to the first busbar (SS1) and actuates the second or third on-board electrical system converter (B3) connected to the first busbar (SS1) to apply the first three-phase alternating voltage to the first busbar (SS1).

9. Method according to claim 8,
**characterised in that**
the control facility (SE) controls the on-board electrical system converter (B1, B2, B3, B4), such that
- the first three-phase alternating voltage has a first voltage level with a first frequency, and
- the second three-phase alternating voltage has a second voltage level with a second, in particular variable, frequency.

10. Rail vehicle (TZ),
**characterised in that**
it comprises at least one supply system according to one of claims 1 to 7.

11. Rail vehicle (TZ) according to claim 10,
**characterised in that**
it is designed as a multiple unit train with several cars for passenger transport, wherein a galley supplied by means of the first busbar (SS1) is arranged in one of the cars in particular.

12. Use of a supply system according to one of claims 1 to 7 for supplying auxiliaries and/or electrical consumers in a rail vehicle (TZ).

## Revendications

1. Système d'alimentation électrique d'un réseau de bord d'un véhicule (TZ) ferroviaire,
dans lequel le véhicule (TZ) ferroviaire comprend une pluralité de matériels (EW1, EW2, MW1, MW2) remorqués ayant une pluralité d'auxiliaires et/ou de consommateurs électriques, qui y sont montés, et
dans lequel le système d'alimentation comprend au moins :
- une première et une deuxième barres (SS1, SS2) collectrices, dans lequel les barres (SS1, SS2) collectrices s'étendent respectivement sur au moins deux matériels (EW1, EW2, MW1, MW2) remorqués du véhicule (TZ) ferroviaire et, à chacune des barres (SS1, SS2) collectrices, est connecté au moins un auxiliaire et/ou un consommateur électrique, et dans lequel la première barre (SS1) collectrice a trois conducteurs (L1, L2, L3) de phase et un conducteur (N) neutre et la deuxième barre (SS2) collectrice a exclusivement trois conducteurs (L1, L2, L3) de phase,
- au moins trois convertisseurs (B1, B2, B3, B4) du réseau de bord pouvant être connectés aux barres (SS1, SS2) collectrices, et
- un dispositif (SE) de commande, dans lequel le dispositif (SE) de commande est conformé pour commander au moins les convertisseurs (B1, B2, B3, B4) du réseau de bord,
dans lequel
- les convertisseurs (B1, B2, B3, B4) du réseau de bord sont, en ce qui concerne leur construction électrique, conformés pareillement, peuvent être connectés électriquement respectivement à la première et à la deuxième barres (SS1, SS2) collectrices, et conformés chacun, commandé par le dispositif (SE) de commande, pour créer une première et une deuxième tensions alternatives triphasées,
- le dispositif (SE) de commande est conformé pour connecter exclusivement un premier des convertisseurs (B1) du réseau de bord à la première barre (SS1) collectrice et pour commander le premier convertisseur (B1) du réseau de bord, pour appliquer la première tension alternative triphasée à la première barre (SS1) collectrice et pour connecter à la deuxième barre (SS2) collectrice au moins un deuxième et un troisième convertisseurs (B2, B3, B4) du réseau de bord et pour commander respectivement le deuxième et le troisième convertisseurs (B2, B3, B4) du réseau de bord, qui appliquent la deuxième tension alternative triphasée à la deuxième barre (SS2) collectrice, et
- le dispositif (SE) de commande est conformé pour séparer, en cas de défaillance du premier convertisseur (B1) du réseau de bord, le premier convertisseur (B1) du réseau de bord de la première barre (SS1) collectrice, pour séparer exclusivement le deuxième ou le troisième convertisseur (B3) du réseau de bord de la deuxième barre (SS2) collectrice et pour le connecter à la première barre (SS1) collectrice et pour commander le deuxième ou le troisième convertisseur (B3) du réseau de bord connecté à la première barre (SS1) collectrice, pour appliquer la première tension alternative triphasée à la première barre (SS1) collectrice.

2. Système d'alimentation suivant la revendication 1,
**caractérisé en ce que**
le dispositif (SE) de commande est conformé pour commander les convertisseurs (B1, B2, B3, B4) du réseau de bord, **en ce que**
- la première tension alternative triphasée a un premier niveau de tension avec une première fréquence, et
- la deuxième tension alternative triphasée a un deuxième niveau de tension avec une deuxième fréquence, en particulier variable.

3. Système d'alimentation suivant la revendication 1 ou 2,
**caractérisé en ce que**
la première tension alternative triphasée a un niveau de tension constant de 400 V avec une fréquence de 50 Hz.

4. Système d'alimentation suivant l'une des revendications précédentes,
**caractérisé en ce que**
le conducteur (N) neutre de la première barre (SS1) collectrice est connecté à un point médian de tension d'un circuit intermédiaire à tension continue du premier, deuxième ou troisième convertisseur (B1, B3) du réseau de bord connecté à la première barre (SS1) collectrice.

5. Système d'alimentation suivant l'une des revendications précédentes,
**caractérisé en ce que**
les convertisseurs (B1, B2, B3, B4) du réseau de bord peuvent, au moyen d'interrupteurs (SC1, SC2) respectifs, en particulier de sectionneurs pouvant être commandés par le dispositif de commande, être connectés aux barres (SS1, SS2) collectrices.

6. Système d'alimentation suivant l'une des revendications précédentes,
**caractérisé en ce que**
les convertisseurs (B1, B2, B3, B4) du réseau de bord sont disposés, de manière répartie, dans au moins deux matériels (EW1, EW2) remorqués du véhicule (TZ) ferroviaire, dans lequel, en particulier le premier et le deuxième convertisseurs (B1, B2) du réseau de bord ou le premier et le troisième convertisseurs du réseau de bord sont disposés conjointement dans un matériel (EW1) remorqué.

7. Système d'alimentation suivant l'une des revendications précédentes,
**caractérisé en ce que**
les convertisseurs (B1, B2, B3, B4) du réseau de bord comprennent respectivement un onduleur à impulsion pouvant être commandé par le dispositif (SE) de commande, dans lequel l'onduleur à impulsion est conformé pour transformer une tension continue d'un circuit intermédiaire à tension continue du convertisseur (B1, B2, B3, B4) du réseau de bord en la première ou la deuxième tension alternative triphasée.

8. Procédé de commande d'un système d'alimentation électrique d'un réseau de bord d'un véhicule (TZ) ferroviaire,
dans lequel le véhicule (TZ) ferroviaire comprend une pluralité de matériels (EW1, EW2, MW1, MW2) remorqués ayant une pluralité d'auxiliaires et/ou de consommateurs électriques montés dans ceux-ci, et
dans lequel le système d'alimentation comprend au moins :
- une première et une deuxième barres (SS1, SS2) collectrices, dans lequel les barres (SS1, SS2) collectrices s'étendent respectivement sur au moins deux matériels (EW1, EW2, MW1, MW2) remorqués du véhicule (TZ) ferroviaire et, à chacune des barres (SS1, SS2) collectrices, est connecté au moins un auxiliaire et/ou un consommateur électrique, et dans lequel la première barre (SS1) collectrice a trois conducteurs (L1, L2, L3) de phase et un conducteur (N) neutre et la deuxième barre (SS2) collectrice a exclusivement trois conducteurs (L1, L2, L3) de phase,
- au moins trois convertisseurs (B1, B2, B3, B4) du réseau de bord pouvant être connectés aux barres (SS1, SS2) collectrices, et
- un dispositif (SE) de commande, dans lequel le dispositif (SE) de commande est conformé pour commander au moins les convertisseurs (B1, B2, B3, B4) du réseau de bord,
dans lequel
- les convertisseurs (B1, B2, B3, B4) du réseau de bord sont, en ce qui concerne leur construction électrique, conformés pareillement, peuvent être connectés électriquement respectivement à la première et à la deuxième barres (SS1, SS2) collectrices, et conformés chacun, commandé par le dispositif (SE) de commande, pour créer une première et une deuxième tensions alternatives triphasées,
- le dispositif (SE) de commande connecte exclusivement un premier des convertisseurs (B1) du réseau de bord à la première barre (SS1) collectrice et commande le premier convertisseur (B1) du réseau de bord, pour appliquer la première tension alternative triphasée à la première barre (SS1) collectrice, et connecte au moins un deuxième et un troisième convertisseurs (B2, B3, B4) du réseau de bord à la deuxième barre (SS2) collectrice et commande respectivement le deuxième et le troisième convertisseurs (B2, B3, B4) du réseau de bord, pour appliquer la deuxième tension alternative triphasée à la deuxième barre (SS2) collectrice, et
- le dispositif (SE) de commande sépare, en cas de défaillance du premier convertisseur (B1) du réseau de bord, le premier convertisseur (B1) du réseau de bord de la première barre (SS1) collectrice, sépare exclusivement le deuxième ou le troisième convertisseur (B3) du réseau de bord de la deuxième barre (SS2) collectrice et le connecte à la première barre (SS1) collectrice et commande le deuxième ou le troisième convertisseur (B3) du réseau de bord connecté à la première barre (SS1) collectrice, pour appliquer la première tension alternative triphasée à la première barre (SS1) collectrice.

9. Procédé suivant la revendication 8,
**caractérisé en ce que**
le dispositif (SE) de commande commande les convertisseurs (B1, B2, B3, B4) du réseau de bord, **en ce que**
- la première tension alternative triphasée a un premier niveau de tension avec une première fréquence, et
- la deuxième tension alternative triphasée a un deuxième niveau de tension avec une deuxième fréquence, en particulier variable.

10. Véhicule (TZ) ferroviaire,
**caractérisé en ce qu'**
il comprend au moins un système d'alimentation suivant l'une des revendications 1 à 7.

11. Véhicule (TZ) ferroviaire suivant la revendication 10,
**caractérisé en ce qu'**
il est conformé en rame automotrice, ayant plusieurs matériels remorqués pour un transport de personnes, dans lequel une cuisine de bord alimentée, en particulier, au moyen de la première barre (SS1) collectrice, est disposée dans l'un des matériels remorqués.

12. Utilisation d'un système d'alimentation suivant l'une des revendications 1 à 7, pour l'alimentation d'auxiliaires et/ou de composants électriques dans un véhicule (TZ) ferroviaire.
